(19) Europäisches Patentamt
European Patent Office
Office européen des brevets

(11) **EP 4 726 674 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
**G06V 10/82** (2022.01)

(21) Application number: **24935275.8**

(86) International application number:
**PCT/CN2024/138580**

(22) Date of filing: **11.12.2024**

(87) International publication number:
**WO 2026/040264 (26.02.2026 Gazette 2026/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.08.2024 CN 202411156146**

(71) Applicant: **SHENZHEN GOODIX TECHNOLOGY
CO., LTD.
Shenzhen, Guangdong 518045 (CN)**

(72) Inventors:
• **GU, Qin**
  **Shenzhen, Guangdong 518045 (CN)**
• **QIU, Kang**
  **Shenzhen, Guangdong 518045 (CN)**
• **LU, Yifu**
  **Shenzhen, Guangdong 518045 (CN)**
• **HE, Jingwei**
  **Shenzhen, Guangdong 518045 (CN)**
• **CHEN, Juan**
  **Shenzhen, Guangdong 518045 (CN)**

(74) Representative: **Kraus & Lederer PartGmbB
Thomas-Wimmer-Ring 15
80539 München (DE)**

(54) **FINGERPRINT ANTI-SPOOFING NEURAL NETWORK TRAINING METHOD AND APPARATUS
AND FINGERPRINT ANTI-SPOOFING METHOD AND APPARATUS**

(57) Embodiments of the present disclosure provide a method for training a fingerprint anti-counterfeiting neural network, a method for fingerprint anti-counterfeiting, an apparatus for training a fingerprint anti-counterfeiting neural network, and an apparatus for fingerprint anti-counterfeiting, comprising: obtaining a plurality of groups of training data, each group of the training data comprising: first raw domain data, second raw domain data, and third raw domain data; and training an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair. The present disclosure solves the problem of low recognition accuracy rate of real and prosthetic fingerprints in related art, and achieves the effects of improving the recognition accuracy rate of real and prosthetic fingerprints.

FIG. 2

# Description

The present application claims priority to Patent Application for Invention No. "202411156146.5" titled "METHOD FOR TRAINING FINGERPRINT ANTI-COUNTERFEITING NEURAL NETWORK, METHOD FOR FINGERPRINT ANTI-COUNTERFEITING, APPARATUS FOR TRAINING FINGERPRINT ANTI-COUNTERFEITING NEURAL NETWORK, AND APPARATUS FOR FINGERPRINT ANTI-COUNTERFEITING" and filed on 21 August 2024, the entire content of which is incorporated herein by reference.

## TECHNICAL FIELD

Embodiments of the present disclosure relate to the field of fingerprint recognition, and specifically relate to a method for training a fingerprint anti-counterfeiting neural network, a method for fingerprint anti-counterfeiting, an apparatus for training a fingerprint anti-counterfeiting neural network, and an apparatus for fingerprint anti-counterfeiting.

## BACKGROUND

In daily life, a fingerprint recognition technology is often used to authenticate a user, such as: smart device unlocking, log-in to an application program, or online payment. In the development in recent years, various types of sensors, such as a capacitive sensor, an optical sensor, and an ultrasonic sensor, can be used to collect fingerprint data.

In the field of fingerprint anti-counterfeiting, a neural network model can be used to improve recognition rates of real fingerprints and prosthetic fingerprints. At present, the neural network model is trained generally using fingerprint data collected by a sensor type. Since many sensor types for collecting fingerprints are available on a target market, different neural network models need to be trained for different sensor types. The training of the neural network models is complex and is resource-consuming. Moreover, a trained neural network model can only recognize fingerprints collected by one sensor type, and fails to recognize fingerprint data collected by other sensor types, thereby restricting its application range.

In addition, fingerprint data collection is usually affected by an environment (such as temperature fluctuation, film interference, and finger state change), and training the neural network model directly using fingerprint data collected by a sensor will affect training effects of the neural network model, so that the trained neural network model has low recognition accuracy.

At present, there is no effective solution to the above problems.

## SUMMARY

Embodiments of the present disclosure provide a method for training a fingerprint anti-counterfeiting neural network, a method for fingerprint anti-counterfeiting, an apparatus for training a fingerprint anti-counterfeiting neural network, and an apparatus for fingerprint anti-counterfeiting, to at least solve the problem of low recognition accuracy rate of real and prosthetic fingerprints in related art.

According to an embodiment of the present disclosure, a method training for a fingerprint anti-counterfeiting neural network is provided, comprising: obtaining a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger; and training an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

In an example embodiment, training the initial classification network using the plurality of groups of training data to obtain the target classification network comprises: iteratively training the initial classification network using the plurality of groups of training data until the number of trainings on the initial classification network reaches a target number, or ending the training to obtain the target classification network when a loss value outputted from a target loss function of the initial classification network satisfies a preset training end condition; wherein the initial classification network further comprises a preprocessing subnetwork configured to convert raw domain data collected by a fingerprint sensor into a corresponding feature description matrix; the loss value outputted from the target loss function is a loss value determined based on a loss value outputted from a first loss function of the preprocessing subnetwork and a loss value outputted from a second loss function of the classification subnetwork; the first loss function is used to represent a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

In an example embodiment, iteratively training the initial classification network using the plurality of groups of training data comprises: performing a k-th training (wherein k is a positive integer) on the initial classification network by: obtaining a k-th group of training data used for the k-th training on the initial classification network from the plurality of groups of training data; inputting the first raw domain data, the second raw domain data, and the third raw domain data in the k-th group of training data into the preprocessing subnetwork of the initial classification network with a (k-1)-th training, to obtain a first feature description matrix, a second feature description matrix, and a third feature description matrix respectively, wherein the initial classification network with a 0-th training is the initial classification network that is not trained, and the preprocessing subnetwork is configured to convert raw domain data obtained by different sensor types into corresponding feature description matrices; inputting the first feature description matrix, the second feature description matrix, and the third feature description matrix into a feature extraction subnetwork of the initial classification network with the (k-1)-th training for dimension reduction, to obtain a fourth feature description matrix, a fifth feature description matrix, and a sixth feature description matrix respectively; inputting the fourth feature description matrix and the fifth feature description matrix into the fusion subnetwork of the initial classification network with the (k-1)-th training, to obtain the first fingerprint matching pair of the k-th training;

inputting the fourth feature description matrix and the sixth feature description matrix into the fusion subnetwork of the initial classification network with the (k-1)-th training, to obtain the second fingerprint matching pair of the k-th training;

inputting the first fingerprint matching pair of the k-th training and the second fingerprint matching pair of the k-th training into the classification subnetwork of the initial classification network with the (k-1)-th training, to obtain a predicted tag of the k-th training, wherein the predicted tag of the k-th training is used to represent an authenticity recognition result of the initial classification network with the (k-1)-th training for a fingerprint of the real finger corresponding to the second raw domain data in the k-th group of training data, and an authenticity recognition result of the initial classification network with the (k-1)-th training for a fingerprint of the prosthetic finger corresponding to the third raw domain data in the k-th group of training data; and

determining a loss value outputted from the first loss function of the k-th training based on the first feature description matrix, the second feature description matrix, the third feature description matrix, and a known feature description matrix corresponding to the first raw domain data, the second raw domain data and the third raw domain data in the k-th group of training data; determining a loss value outputted from the second loss function of the k-th training based on the predicted tag of the k-th training and a known real tag of the k-th training; determining a loss value outputted from the target loss function of the k-th training based on the loss value outputted from the first loss function of the k-th training and the loss value outputted from the second loss function of the k-th training; and adjusting a value of a parameter in the initial classification network with the (k-1)-th training when k is smaller than the target number, or when the loss value outputted from the target loss function of the k-th training does not satisfy the training end condition, to obtain the initial classification network with the k-th training.

In an example embodiment, the target loss function is:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork, $loss_{BCE}$ is the second loss function of the classification subnetwork; and

the classification network further comprises a feature extraction subnetwork, the preprocessing subnetwork is configured to convert the raw domain data obtained by the fingerprint sensor into a corresponding feature description matrix and input it into the feature extraction subnetwork, and the feature extraction subnetwork is configured to perform dimension reduction on the inputted feature description matrix, and input a matrix obtained after the dimension reduction into the fusion subnetwork.

In an example embodiment, the loss value outputted from the first loss function of the preprocessing subnetwork is determined based on formulas below:

$$loss_{MSE\_t} = \frac{\sum_{i=1}^{h} \sum_{j=1}^{w} (f(i,j) - y(i,j))}{h \times w}$$

$$loss_{MSE} = loss_{MSE\_1} + loss_{MSE\_2} + loss_{MSE\_3}$$

wherein, $t \in (1,3)$, $i \in (1,h)$, $j \in (1,w)$, and $f(i,j)$ are feature description matrices outputted from the preprocessing subnetwork, $y(i,j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

In an example embodiment, the loss value outputted from the second loss function of the classification subnetwork is determined based on a formula below:

$$loss_{BCE} = -y \times \log(x) - (1-y) \times \log(1-x)$$

wherein, y is a real tag value of the first fingerprint matching pair or the second fingerprint matching pair, and x is a predicted tag value of the first fingerprint matching pair or the second fingerprint matching pair outputted from the classification subnetwork.

According to another embodiment of the present disclosure, a method for fingerprint anti-counterfeiting is provided, comprising: obtaining raw domain data of a to-be-detected fingerprint; preprocessing the raw domain data of the to-be-detected fingerprint via a preprocessing subnetwork of a target classification network to obtain a seventh feature description matrix; performing feature extraction on the seventh feature description matrix via a feature extraction subnetwork of the target classification network to obtain an eighth feature description matrix; determining a ninth feature description matrix matching the eighth feature description matrix in a fingerprint template feature library, wherein a plurality of feature description matrices of a real finger entered in a fingerprint template are stored in the fingerprint template feature library; fusing the eighth feature description matrix and the ninth feature description matrix to obtain a fused feature matrix; and inputting the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

In an example embodiment, before determining the ninth feature description matrix matching the eighth feature description matrix in the fingerprint template feature library, the method further comprises: obtaining raw domain data of the real finger entered in the fingerprint template; preprocessing the raw domain data using the preprocessing subnetwork of the target classification network to obtain a feature description matrix of the raw domain data; performing dimension reduction on the feature description matrix using the feature extraction subnetwork of the target classification network to obtain a feature description matrix after dimension reduction; and storing the feature description matrix after the dimension reduction in the fingerprint template feature library.

According to another embodiment of the present disclosure, an apparatus for training a fingerprint anti-counterfeiting neural network is provided, comprising: a first obtaining module configured to obtain a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger; and a training module configured to train an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

According to another embodiment of the present disclosure, an apparatus for fingerprint anti-counterfeiting is provided, comprising: a second obtaining module configured to obtain raw domain data of a to-be-detected fingerprint; a preprocessing module configured to preprocess the raw domain data of the to-be-detected fingerprint via a preprocessing subnetwork of a target classification network to obtain a seventh feature description matrix; a feature extraction module configured to perform feature extraction on the seventh feature description matrix via a feature extraction subnetwork of the target classification network to obtain an eighth feature description matrix; a determination module configured to determine a ninth feature description matrix matching the eighth feature description matrix in a fingerprint template feature library, wherein a plurality of feature description matrices of a real finger entered in a fingerprint template are stored in the fingerprint template feature library; a fusion module configured to fuse the eighth feature description matrix and the ninth feature description matrix to obtain a fused feature matrix; and a recognition module configured to input the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

According to another embodiment of the present disclosure, a computer-readable storage medium is further provided, storing a computer program therein, wherein the computer program, when executed by a processor, implements the steps of the method in any one of the above embodiments.

According to another embodiment of the present disclosure, an electronic apparatus is further provided, comprising: a memory and a processor, wherein the memory stores a computer program, and the processor is configured to run the computer program to implement the steps in any one of the above method embodiments.

According to the present disclosure, an initial classification network is trained using first raw domain data of a real finger collected when the real finger is entered in a fingerprint template, second raw domain data of the real finger collected during fingerprint verification using the real finger, and third raw domain data collected during fingerprint verification using a prosthetic finger in place the real finger as training data;

in the present disclosure, features of the first raw domain data and the second raw domain data are fused by sample feature fusion via a fusion subnetwork to generate a first fingerprint matching pair, and features of the first raw domain data and the third raw domain data are fused to generate a second fingerprint matching pair; and

in the present disclosure, a classification subnetwork is trained using the fused first fingerprint matching pair and second fingerprint matching pair, thereby reducing the influence of environmental factors during fingerprint data collection on training of a neural network model, achieving the purpose of preventing the environmental factors from affecting training effects of the neural network model, then solving the problem of low recognition accuracy rate of the trained neural network model due to the environmental influence during fingerprint data collection in the related art, and then achieving the effects of improving the recognition accuracy rate of real and prosthetic fingerprints.

In addition, a preprocessing subnetwork in the present disclosure can convert raw domain data collected by a fingerprint sensor into a feature description matrix. Then, the trained target classification network can recognize fingerprints collected by various sensor types, thereby solving the problems that different neural network models need to be trained for different sensor types in the prior art, due to which the neural network model training is complex and resource-consuming, the trained neural network model fails to recognize fingerprint data collected by other sensor types, and its application range is restricted, and then achieving the technical effects that a target classification network of the present disclosure can be used to recognize fingerprints collected by various sensor types, has a wider application range, and is more resource-saving.

BRIEF DESCRIPTION OF DRAWINGS

FIG. 1 is a structural block diagram of hardware of a mobile terminal of a method for training a fingerprint anti-counterfeiting neural network and a method for fingerprint anti-counterfeiting in an embodiment of the present disclosure;

FIG. 2 is a flowchart of a method for training a fingerprint anti-counterfeiting neural network according to an embodiment of the present disclosure;

FIG. 3 is an overall architecture diagram of a classification network according to an embodiment of the present disclosure;

FIG. 4 is a flowchart of authenticity recognition of a to-be-detected fingerprint according to an embodiment of the present disclosure;

FIG. 5 is a schematic architecture diagram of a similarity measurement classification network according to an embodiment of the present disclosure;

FIG. 6 is a structural table of feature extraction of a deep convolutional neural network according to an embodiment of the present disclosure;

FIG. 7 is an overall schematic flowchart according to an embodiment of the present disclosure;

FIG. 8 is a schematic diagram of comparison of measured benefits of ultrasonic anti-counterfeiting according to an embodiment of the present disclosure;

FIG. 9 is a schematic diagram of comparison of benefits of a similarity measurement mechanism according to an embodiment of the present disclosure; and

FIG. 10 is a structural block diagram of an apparatus for recognizing real and prosthetic fingerprints according to an embodiment of the present disclosure.

DETAILED DESCRIPTION

Embodiments of the present disclosure will be described in detail below with reference to the drawings and in combination with the embodiments.

Raw domain data: refers to a digital matrix obtained by converting a collected fingerprint signal through analog-to-digital conversion during fingerprint collection using a sensor. The raw domain data is unpreprocessed raw data with which texture information of a finger cannot be observed intuitively. However, the raw domain data comprises all raw information that has not been filtered out, and is more adapted to feature extraction in combination with a deep learning technology.

FLRR: False Liveness Reject Rate.

SAR: Spoof Accept Rate.

Conv: Convolution operator in a deep convolutional neural network.

Avg Pooling: Average pooling, an average-based downsampling operator.

Depth-wise Conv: Depth-wise separable convolution in a deep convolutional neural network.

Transformer: A deep learning network architecture with an attention mechanism.

MLP: Multilayer Perceptron, a classic network architecture.

Binary Cross Entropy: a classic classification loss function.

It should be noted that the terms such as "first" and "second" in the description, the claims, and the above drawings of the present disclosure are used to distinguish between similar objects, and are not necessarily used to describe a particular sequence or a sequential order.

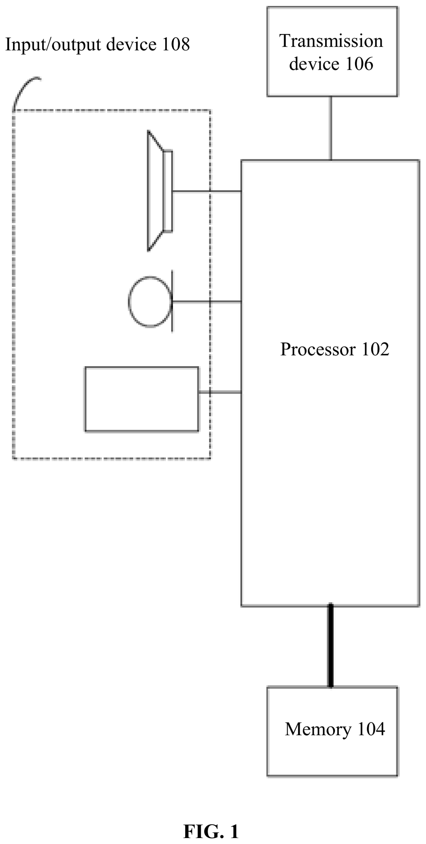

The method embodiments provided in the embodiments of the present disclosure can be executed in a mobile terminal, a computer terminal, or a similar computing apparatus. Taking the running on a mobile terminal as an example, FIG. 1 is a structural block diagram of hardware of a mobile terminal of a method for training a fingerprint anti-counterfeiting neural network and a method for fingerprint anti-counterfeiting in an embodiment of the present disclosure. As shown in FIG. 1, the mobile terminal may comprise one or more (only one is shown in FIG. 1) processors 102 (the processor 102 may include, but is not limited to, a processing apparatus such as a microprocessor MCU or a programmable logic device FPGA) and a memory 104 configured to store data, wherein the above mobile terminal may further comprise a transmission device 106 for communication functions and an input/output device 108. Those with ordinary skills in the art can understand that the structure shown in FIG. 1 is only illustrative, and does not impose any limitation on the structure of the above mobile terminal. For example, the mobile terminal may further comprise more or fewer components than shown in FIG. 1, or have a different configuration than shown in FIG. 1.

The memory 104 can be configured to store a computer program, for example, a software program and a module of an application software, such as a computer program corresponding to a method for training a fingerprint anti-counterfeiting neural network and a method for fingerprint anti-counterfeiting in an embodiment of the present disclosure. The processor 102 runs the computer program stored in the memory 104, thereby executing various function applications and data processing, that is, implementing the above methods. The memory 104 may comprise a high-speed random memory, and may further comprise a non-volatile memory, such as one or more magnetic storage apparatuses, flash memories, or other non-volatile solid-state memories. In some instances, the memory 104 may further comprise memories remotely arranged relative to the processor 102, and these remote memories may be connected to the mobile terminal via a network. Examples of the above network include, but are not limited to, the Internet, an intranet, a local area network, a mobile communication network, and a combination thereof.

The transmission device 106 is configured to receive or send data via a network. A specific example of the above network may include a wireless network provided by a communication provider of the mobile terminal. In an instance, the transmission device 106 includes a Network Interface Controller (abbreviated as NIC), which can be connected to other network devices through a base station so as to communicate with the Internet. In an instance, the transmission device 106 may be a radio frequency (RF) module, which is configured to communicate with the Internet wirelessly.

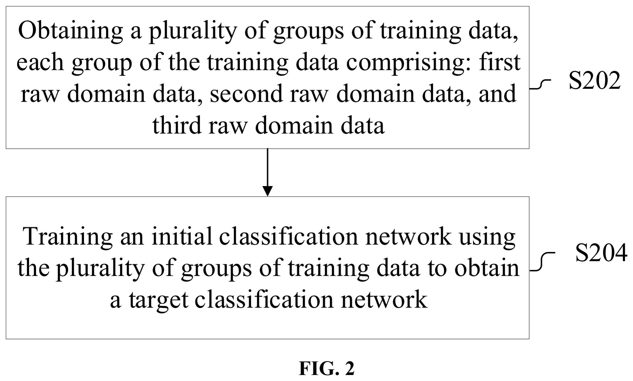

In this embodiment, a method for training a fingerprint anti-counterfeiting neural network running on the above mobile terminal is provided. FIG. 2 is a flowchart of the method for training a fingerprint anti-counterfeiting neural network according to an embodiment of the present disclosure. As shown in FIG. 2, the process includes the following steps:

Step S202: obtaining a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger;

wherein the plurality of groups of training data include raw domain data collected by at least two sensor types, for example, raw domain data collected by a plurality of sensor types such as a capacitive sensor, an optical sensor, and an ultrasonic sensor.

Typing a real finger in a fingerprint template refers to: an operation of placing the real finger on a fingerprint recognition device (the fingerprint recognition device is provided with a sensor, to collect fingerprint data using the sensor), and typing in the fingerprint template following instructions of the device. After the entry is completed, the system will generate a unique fingerprint template for subsequent fingerprint recognition and verification.

Fingerprint verification means to: compare collected fingerprint data with a pre-entered fingerprint template to determine whether the user's identity matches.

The above prosthetic finger includes, but is not limited to, a prosthetic fingerprint made using various processes including print paper, silica gel, wood glue, latex, etc.

Step S204: training an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

Optionally, an execution body of the above steps may be a back-end processor or other devices with similar processing power, or may be a machine that at least integrates an image obtaining device and a data processing device, wherein the image obtaining device may comprise a graphics acquisition module such as a camera, and the data processing device may include, but is not limited to, a terminal such as a computer and a mobile phone.

The initial classification network comprises: a preprocessing subnetwork, a fusion subnetwork, a feature subnetwork, and a classification subnetwork, and a neural network model in the prior art, such as a convolutional neural network, may serve as the above subnetworks. The initial classification network is iteratively trained using the plurality of groups of training data, the number of iterative trainings may be a target number, and when the number of trainings reaches the target number, the training is ended to obtain the target classification network. Or, when a loss value outputted from a target loss function satisfies a preset training end condition, the training is ended to obtain the target classification network.

The loss value outputted from the target loss function comprises: a loss value outputted from a first loss function of the preprocessing subnetwork and a loss value outputted from a second loss function of the classification subnetwork. The target loss function is as follows:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork, and $loss_{BCE}$ is the second loss function of the classification subnetwork.

The above preprocessing subnetwork is configured to convert raw domain data collected by a fingerprint sensor into a corresponding feature description matrix. The fingerprint sensor is one of a capacitive fingerprint sensor, an optical fingerprint sensor, or an ultrasonic fingerprint sensor. The first loss function represents a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

The loss value outputted from the first loss function of the preprocessing subnetwork is determined based on formulas below:

$$loss_{MSE\_t} = \frac{\sum_{i=1}^{h}\sum_{j=1}^{w}(f(i,j) - y(i,j))}{h \times w}$$

$$loss_{MSE} = loss_{MSE\_1} + loss_{MSE\_2} + loss_{MSE\_3}$$

wherein, $t \in (1,3)$, $i \in (1, h)$, $j \in (1, w)$, and $f(i,j)$ are feature description matrices outputted from the preprocessing subnetwork, $y(i,j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

The loss value outputted from the second loss function of the classification subnetwork is determined based on a formula below:

$$loss_{BCE} = -y \times \log(x) - (1 - y) \times \log(1 - x)$$

wherein, y is a real tag value of the first fingerprint matching pair or the second fingerprint matching pair, and x is a predicted tag value of the first fingerprint matching pair or the second fingerprint matching pair outputted from the classification subnetwork.

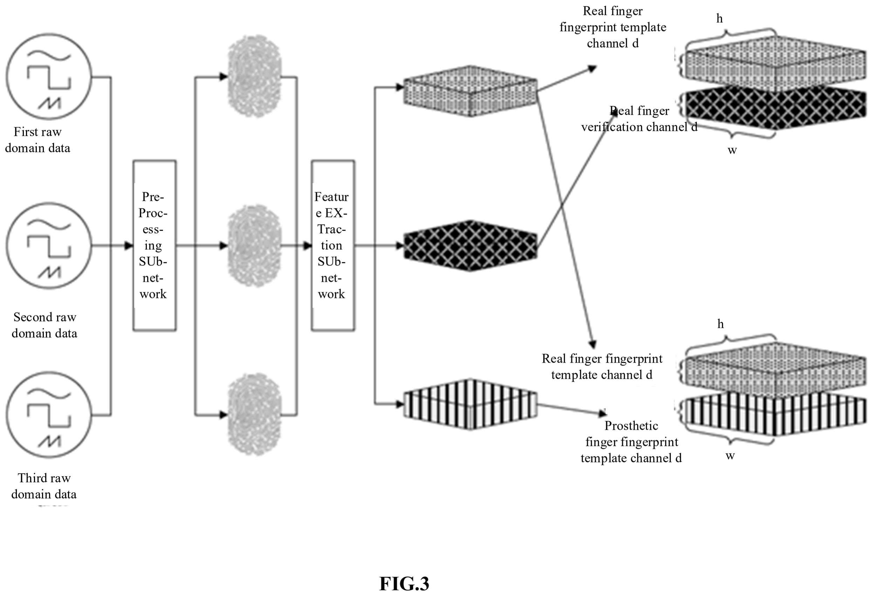

Taking a k-th training of the initial classification network as an example, wherein k is a positive integer, FIG. 3 is an overall architecture diagram of the classification network, including:

the k-th group of training data used for the k-th training on the initial classification network is obtained from the plurality of groups of training data, and the k-th group of training data may be fingerprint data collected using a same sensor type or different sensor types, and may specifically include the following fingerprint data: first raw domain data collected when the real finger is entered in a fingerprint template on a smart device, second raw domain data collected during fingerprint verification of the real finger on the smart device, and third raw domain data collected during fingerprint verification of the prosthetic finger in place of the real finger on the smart device (the prosthetic finger performs fingerprint attack and performs fingerprint verification pretending to be the real finger).

According to information collection characteristics of the sensor, each time the sensor collects a fingerprint, raw domain data (including the first raw domain data, the second raw domain data, and the third raw domain data mentioned above) of a constant dimension with a particular number N (an integer greater than or equal to 1) of channels can be obtained for each pressing, and the resolution is denoted as [Height, Width, N]. Taking raw domain data collected by an ultrasonic sensor as an example, the raw domain data comprises channels of a real part and an imaginary part, and the dimension of the raw domain data may be [80, 80, 2] (which is only illustrative, and the specific dimension of the raw domain data may be determined based on actual situation).

In order to effectively organize the training, the fingerprint template in which the real finger is entered is used as the guidance of training of the initial classification network to recognize real fingerprints and the prosthetic fingerprints. The first raw domain data collected when the real finger is entered in the fingerprint template, the second raw domain data collected during fingerprint verification using the real finger, and the third raw domain data collected during fingerprint verification (during fingerprint attack) using the prosthetic finger in place of the real finger are used as a group of training data (also referred to as a raw domain triplet with a feature dimension of [3, Height, Width, N]).

The first raw domain data, the second raw domain data, and the third raw domain data in the k-th group of training data are inputted into the preprocessing subnetwork of the initial classification network with a (k-1)-th training, to obtain a first feature description matrix, a second feature description matrix, and a third feature description matrix respectively, wherein the initial classification network with a 0-th training is the initial classification network that is not trained, and the preprocessing subnetwork is configured to convert the raw domain data obtained by the fingerprint sensor into the feature description matrix.

The above preprocessing subnetwork may be a network obtained by combining a convolutional layer and a pooling layer, and can convert the raw domain data obtained by the sensor into the feature description matrix (the feature description matrix is a digital matrix obtained by enhancing an image domain fingerprint image). The preprocessing subnetwork is configured to convert the raw domain data collected by the fingerprint sensor into the corresponding feature description matrix.

Relying on a specified known feature description matrix of different sensor types as external guidance, the preprocessing subnetwork is required to output a feature description matrix as consistent as possible with a given known feature description matrix, so as to achieve the purpose of recognizing fingerprint data collected by the plurality of sensor types through a same classification network.

Specifically, for example, the capacitive sensor uses capacitive preprocessing result (a known feature description matrix of the capacitive sensor type) as intermediate guidance, and the preprocessing subnetwork is required to output a feature description matrix as consistent as possible with the capacitive preprocessing result. The optical sensor uses optical preprocessing result (a known feature description matrix of the optical sensor type) as intermediate guidance, and the preprocessing subnetwork is required to output a feature description matrix as consistent as possible with the optical preprocessing result.

Constrained by the above first loss function, the preprocessing subnetwork converts the raw domain data obtained by the fingerprint sensor into the feature description matrix corresponding to the raw domain data.

The first feature description matrix, the second feature description matrix, and the third feature description matrix are inputted into a feature extraction subnetwork of the initial classification network with the (k-1)-th training for dimension reduction, to obtain a fourth feature description matrix, a fifth feature description matrix, and a sixth feature description matrix respectively.

The classification network further comprises a feature extraction subnetwork, the preprocessing subnetwork inputs the outputted feature description matrix (including the first feature description matrix, the second feature description matrix, and the third feature description matrix mentioned above) into the feature extraction subnetwork, and the feature extraction subnetwork performs dimension reduction on the inputted matrix, and inputs the matrix obtained after the dimension reduction into the fusion subnetwork (the matrix obtained after the dimension reduction includes the fourth feature description matrix, the fifth feature description matrix, and the sixth feature description matrix mentioned above).

The above feature extraction subnetwork can construct a feature escape module using a depth-wise separable convolution technology, in combination with the convolutional layer and the pooling layer, to perform large-scale dimension reduction and concentration on the feature description matrix, retain anti-counterfeiting recognizable information to the greatest extent, and filter out clutters and interferences.

The fourth feature description matrix and the fifth feature description matrix are inputted into the fusion subnetwork of the initial classification network with the (k-1)-th training to obtain the first fingerprint matching pair of the k-th training; and the fourth feature description matrix and the sixth feature description matrix are inputted into the fusion subnetwork of the initial classification network with the (k-1)-th training to obtain the second fingerprint matching pair of the k-th training.

The first fingerprint matching pair of the k-th training and the second fingerprint matching pair of the k-th training are inputted into the classification subnetwork of the initial classification network with the (k-1)-th training, to obtain a predicted tag of the k-th training, wherein the predicted tag of the k-th training is used to represent an authenticity recognition result of the initial classification network with the (k-1)-th training for a fingerprint of the real finger corresponding to the second raw domain data in the k-th group of training data, and an authenticity recognition result of the initial classification network with the (k-1)-th training for a fingerprint of the prosthetic finger corresponding to the third raw domain data in the k-th group of training data.

The fusion subnetwork and the classification subnetwork mentioned above use a fully connected layer and softmax to output a currently inputted predicted tag, distinguish between two input modal forms of a fingerprint template of real finger+real finger and a fingerprint template of prosthetic finger+real finger, and realize the recognition function of real and prosthetic fingerprints.

A loss value outputted from the first loss function of the k-th training is determined based on the first feature description matrix, the second feature description matrix, the third feature description matrix, and a known feature description matrix corresponding to the first raw domain data, the second raw domain data and the third raw domain data in the k-th group of training data; a loss value outputted from the second loss function of the k-th training is determined based on the predicted tag of the k-th training and a known real tag of the k-th training; a loss value outputted from the target loss function of the k-th training is determined based on the loss value outputted from the first loss function of the k-th training and the loss value outputted from the second loss function of the k-th training; and a value of a parameter in the initial classification network with the (k-1)-th training is adjusted when k is smaller than the target number, or when the loss value outputted from the target loss function of the k-th training does not satisfy the training end condition, to obtain the initial classification network with the k-th training.

As an optional embodiment, the initial classification network is iteratively trained using the plurality of groups of training data until the number of trainings on the initial classification network reaches the target number, or the training is ended to obtain the target classification network when the loss value outputted from the target loss function of the initial classification network satisfies the preset training end condition;

the above target number is to configure a basic training parameter, AdamW is used as a training optimizer, and for example, 200 epochs can be trained;

the loss value outputted from the target loss function is a loss value determined based on a loss value outputted from a first loss function of the preprocessing subnetwork and a loss value outputted from a second loss function of the classification subnetwork; and

the first loss function is used to represent a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

The initial classification network is iteratively trained using the plurality of groups of training data until the number of trainings on the initial classification network reaches the target number, or the training is ended to obtain the target classification network when the loss value outputted from the target loss function of the initial classification network satisfies the preset training end condition;

the loss value outputted from the target loss function is the loss value determined based on the loss value outputted from the first loss function of the preprocessing subnetwork and the loss value outputted from the second loss function of the classification subnetwork; and

the first loss function is used to represent a loss between the feature description matrix outputted from the preprocessing subnetwork and a known feature description matrix corresponding to a sensor type of the raw domain data inputted into the preprocessing subnetwork, and the second loss function is used to represent the loss between the predicted tag value outputted from the classification subnetwork and the real tag corresponding to the feature description matrix inputted into the classification subnetwork.

Specifically, the above target loss function is:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork included in the classification network, $loss_{BCE}$ is the second loss function of the classification subnetwork; and

all subnetwork parameters in the initial classification network are finely adjusted and updated simultaneously by gradient back-propagation in combination with the AdamW optimizer, thereby gradually reducing the loss function. The employed loss function is linear combination of a preprocessing approximation loss function and a final anti-counterfeiting classification function, wherein values of $\alpha$ and $\beta$ can be set based on actual situation, for example, the value of $\alpha$ is 0.1 and the value of $\beta$ is 0.9.

Each raw domain data included in each group of training data is obtained by one of the following sensors: a capacitive sensor, an optical sensor, and an ultrasonic sensor; and
in order to enable the preprocessing subnetwork to universally process raw domain data collected by a plurality of sensor types including a capacitive sensor, an optical sensor, and an ultrasonic sensor, a mean square error (MSE) loss function between a feature description matrix generated based on a particular preprocessing pipeline and the feature description matrix outputted from the preprocessing subnetwork is first constructed. This function determines whether the preprocessing subnetwork can accurately output a feature description matrix of a corresponding sensor type by calculating a global sum of squares of data differences between the feature description matrix outputted from the preprocessing subnetwork and the feature description matrix obtained based on particular preprocessing one by one. The smaller the value of this function is, the more consistent the result outputted from the constructed preprocessing network is with the feature description matrix obtained by particular preprocessing.

The loss value outputted from the first loss function of the preprocessing subnetwork is determined based on formulas below:

$$ loss_{MSE\_t} = \frac{\sum_{i=1}^{h}\sum_{j=1}^{w}(f(i,j)-y(i,j))}{h \times w} $$

$$ loss_{MSE} = loss_{MSE\_1} + loss_{MSE\_2} + loss_{MSE\_3} $$

wherein, $t \in (1,3)$, $i \in (1, h)$, $j \in (1, w)$, and $f(i,j)$ are feature description matrices outputted from the preprocessing subnetwork, $y(i,j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

The loss value outputted from the second loss function of the classification subnetwork is determined based on a formula below:

$$ loss_{BCE} = -y \times \log(x) - (1-y) \times \log(1-x) $$

wherein, y is a real tag value of the first fingerprint matching pair or the second fingerprint matching pair, and x is a predicted tag value of the first fingerprint matching pair or the second fingerprint matching pair outputted from the classification subnetwork.

As an optional embodiment, when the number of epochs corresponding to the training cycle reaches a preset value 200, optimization is stopped, updating of network parameters is stopped, and network training is completed. Experience shows that after the above training, on the one hand, real and prosthetic fingerprint data matching pairs constructed using a certain scale of raw domain triplet data can improve the effective information filter capacity of the preprocessing subnetwork; on the other hand, the feature extraction network can further substantially reduce to-be-prestored feature dimensions in a practical application, and improve the ease of use; and finally, the iterative training mode of the authenticity data can further enable the network to finally have effective anti-counterfeiting performance.

After the training task is completed, the preprocessing subnetwork and the feature extraction subnetwork are invoked for the fingerprint template in a fingerprint template registration link of the real finger, and each fingerprint template is compressed into a 4*4*10 feature description matrix which is stored in a fingerprint template feature library. Compared with storing the raw domain data 80*80*2, only 1/80 of the original storage space is required, thus saving the storage space.

According to another embodiment of the present disclosure, a method for fingerprint anti-counterfeiting is provided, comprising: obtaining raw domain data of a to-be-detected fingerprint; preprocessing the raw domain data of the to-be-detected fingerprint via a preprocessing subnetwork of the target classification network to obtain a seventh feature description matrix; performing feature extraction on the seventh feature description matrix via a feature extraction subnetwork of the target classification network to obtain an eighth feature description matrix.

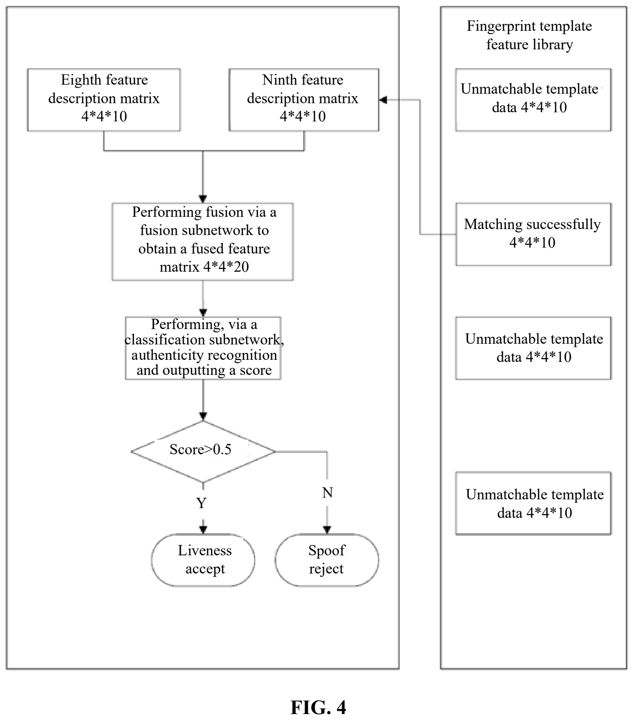

A flowchart of authenticity recognition of a to-be-detected fingerprint as shown in FIG. 4 further includes the following steps:

Step S401: determining a ninth feature description matrix matching the eighth feature description matrix in a fingerprint template feature library, wherein a plurality of feature description matrices of the real finger entered in a fingerprint template are stored in the fingerprint template feature library;

wherein the fingerprint template feature library may be obtained by:

obtaining raw domain data of the real finger entered in the fingerprint template; preprocessing the raw domain data using the preprocessing subnetwork of the target classification network to obtain a feature description matrix of the raw domain data;

performing dimension reduction on the feature description matrix using the feature extraction subnetwork of the target classification network, to obtain a feature description matrix after dimension reduction; and storing the feature description matrix after the dimension reduction in the fingerprint template feature library.

Step S404: fusing the eighth feature description matrix and the ninth feature description matrix to obtain a fused feature matrix; and

Step S405: inputting the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

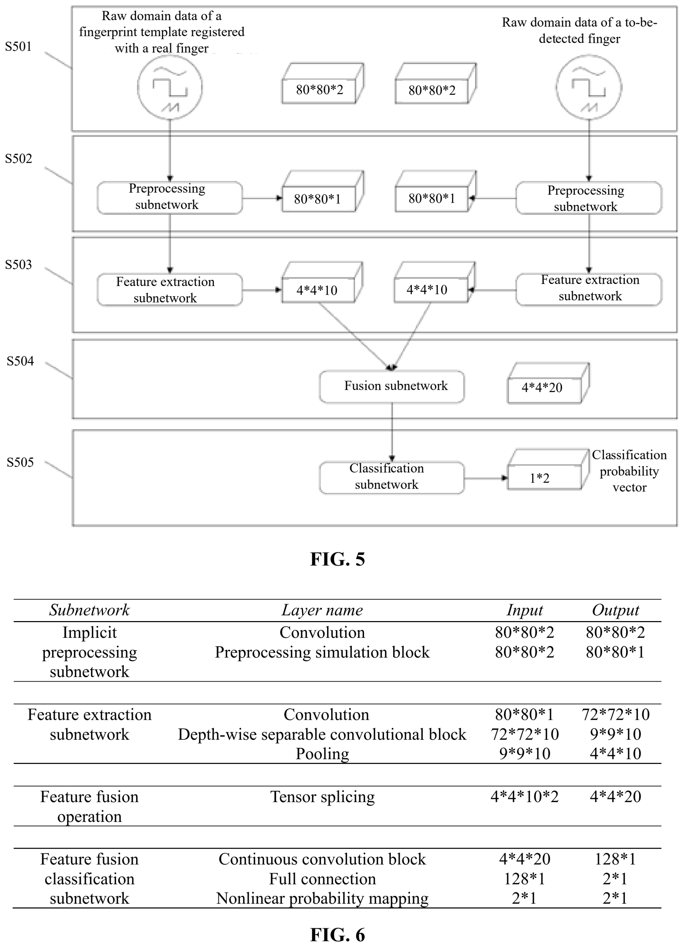

Taking dimension of the raw domain data collected by an ultrasonic sensor [80, 80, 2] as an example, layerwise introduction to data flow of feature descriptor extraction and final fusion classification is provided below. A schematic architecture diagram of a similarity measurement classification network as shown in FIG. 5 includes the following steps:

Step 501: inputting raw domain data of a fingerprint template registered with a real finger and raw domain data of a to-be-detected finger (each having a dimension of 80*80*2) into a preprocessing subnetwork, which has a length of 80, has a width of 80, and comprises channels of a real part and an imaginary part.

Step 502: outputting two feature description matrices with a dimension of 80*80*1 through the preprocessing subnetwork (including the above seventh feature description matrix obtained by preprocessing the raw domain data of the to-be-detected fingerprint via the preprocessing subnetwork, and a feature description matrix obtained by preprocessing the raw domain data of the real finger entered in the fingerprint template via the preprocessing subnetwork when constructing the fingerprint template feature library).

The preprocessing subnetwork can realize fingerprint extraction and enhancement of raw domain data collected by different sensor types through training and guidance using subsequent data, thereby significantly reducing the dependence on the fingerprint preprocessing, and substantially improving the scope of application of the solution.

Step 503: performing, via a feature extraction subnetwork, feature descriptor extraction on the 80*80*1 feature description matrix for a template and a to-be-classified sample respectively using a depth-wise separable block in combination with a pooling layer, to obtain two feature description matrices with a dimension of 4*4*10 (including the above eighth feature description matrix, and a feature description matrix obtained by feature extraction on the preprocessed feature description matrix of the real finger entered in the fingerprint template via the feature extraction subnetwork when constructing the fingerprint template feature library), wherein the feature extraction subnetwork reduces the data dimension while eliminating noise and redundant information, and significantly alleviates the pressure of feature storage.

Step 504: performing, via a fusion subnetwork, channel splicing of the two 4*4*10 feature description matrices by feature splicing and fusion, to construct a feature matrix with a dimension of 4*4*20 (also referred to as fingerprint matching pair).

A fingerprint recognition mechanism carried by a fingerprint recognition system is used to index a feature description matrix of a same finger in a corresponding registration link, and feature fusion is performed to form a 4*4*20 fused feature matrix.

Step 505: performing, via a continuous convolution block, information restructuring on the feature matrix with the dimension of 4*4*20 in a final classification subnetwork, converting the feature matrix after information restructuring into a 128-dimensional descriptor, and mapping the descriptor to a 2-dimensional authenticity probability using full connection. A 2-dimensional output is converted into an authenticity probability value by nonlinear mapping.

The fused feature matrix is sent to the trained fusion subnetwork and classification subnetwork to obtain a probability that the data is a real finger matching fusion feature and a prosthetic fingerprint matching fusion feature, and generate an authenticity recognition result based on the probability result.

In an application link, the preprocessing subnetwork and the feature extraction subnetwork are invoked to compress each unlocked and pressed data into a 4*4*10 feature description matrix. FIG. 6 shows a structural table of feature extraction of a deep convolutional neural network. Based on depth-wise separable convolution, full connection, and nonlinear mapping, an authenticity recognition result can be obtained, including a score corresponding to the real finger.

Since a valley-ridge texture of a same finger has 3D structural stability under certain conditions, liveness-pressed frame data should maintain relative consistency with the registered real finger in 3D structure. In addition, in order to improve the matching accuracy of 3D structure and avoid the cumbersome and inefficient manual traditional similar feature extraction, a convolutional neural network (CNN) is used to build a universal fingerprint anti-counterfeiting network.

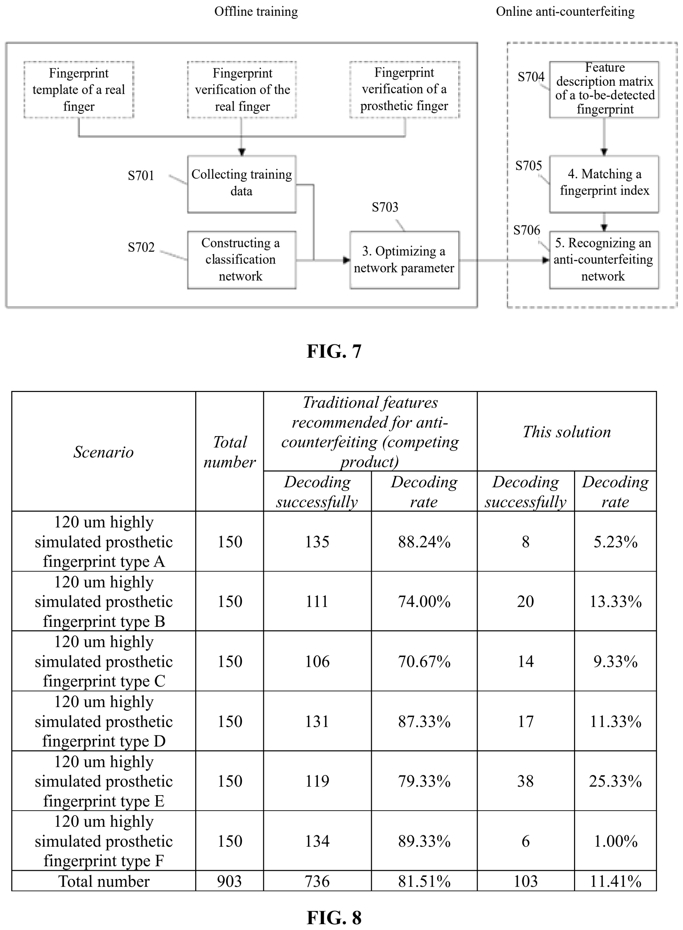

FIG. 7 shows an overall schematic flowchart, including:

Step S701: collecting training data, including raw domain data collected during registration with a real finger in a fingerprint template, second raw domain data collected during fingerprint verification of the real finger, and third raw domain data collected during fingerprint verification using a prosthetic finger in place of the real finger;

Step S702: building a segmentwise initial classification network based on CNN, including a preprocessing subnetwork, a feature extraction subnetwork, a fusion subnetwork, and a classification subnetwork;

Step S703: performing overall parameter optimization on the initial classification network using the training data;

Step S704: invoking the preprocessing subnetwork and the feature extraction subnetwork for each registered fingerprint template based on capture of raw domain data of a to-be-detected fingerprint, to obtain a feature description matrix of the raw domain data of the to-be-detected fingerprint;

Step S705: indexing a feature description matrix of a matchable fingerprint template through a conventional fingerprint matching algorithm;

in actual use, invoking the preprocessing subnetwork and the feature extraction subnetwork for each fingerprint template registered with the real finger in the registration stage to obtain a feature description matrix of the fingerprint template, and retain fingerprint template features of each pressing at a low storage cost; and

Step 706: fusing the paired feature description matrix of the fingerprint template and the feature description matrix of the to-be-detected fingerprint, and sending the fused feature description matrix to a trained particular classification subnetwork to obtain an authenticity recognition result of the to-be-detected fingerprint and complete recognition.

In view of the defect of the universal fingerprint anti-counterfeiting technology, the present disclosure presents a fingerprint anti-counterfeiting solution based on template-sample fused features, constructs a model from the physical dimension of "authenticity distinguishability of a raw domain fused input signal by unlocking and pressing a fingerprint template", and guides training of an authenticity recognition network of template-sample fused information using combination data of authenticity matching pairs, thereby implementing high-precision detection and anti-counterfeiting for highly simulated prosthetic fingerprints at low computational complexity costs and zero external hardware sensor costs.

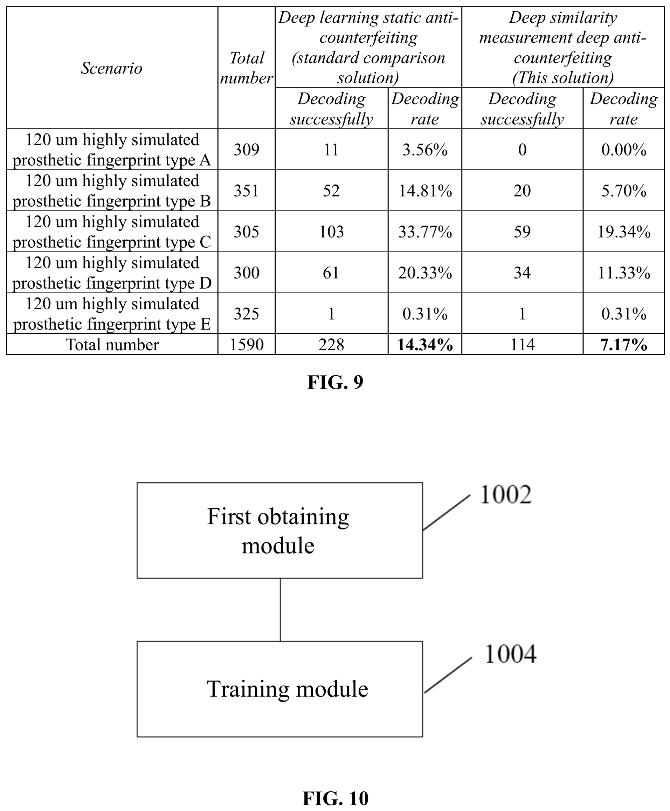

In the comparison of the measured benefits of ultrasonic anti-counterfeiting in the present disclosure as shown in FIG. 8 and the comparison of the benefits of the similarity measurement mechanism in the present disclosure as shown in FIG. 9, a false liveness reject rate (FLRR) and a spoof accept rate (SAR) are used as performance evaluation indicators. A parameter No. Liveness Rejection represents the number of rejections of a real finger, a parameter No. Liveness Pressing represents the number of pressings of the real finger, a parameter No. Spoof Accept represents the number of spoof accepts and passes of a prosthetic finger, and a parameter No. Spoof Attack represents a total number of attacks of the prosthetic finger.

$$FLRR = \frac{No.Liveness\ Rejection}{No.Liveness\ Pressing}$$

$$SAR = \frac{No.Spoof\ Accept}{No.Spoof\ Attach}$$

Taking ultrasonic fingerprint anti-counterfeiting as an example, six highly probably decodable 3D fingerprints are made from three-dimensional fingerprint extraction materials including, e.g., gel and latex. 5 fingers are made for each prosthetic fingerprint type, and each finger attacks 30 times, totaling about 150 attacks. The experimental result shows that compared with the current mainstream simple anti-counterfeiting mode of manually constructing traditional features for distribution comparison, this solution effectively utilizes fused information of the fingerprint template and an unlocking sample, in combination with the high robustness of artificial intelligence algorithms, can robustly effectively defense against various types of prosthetic fingerprints without significantly affecting the real finger unlocking experience, and reduces the average decoding rate from 81.51% to 7.17%.

In the above fusion subnetwork, preprocessing steps including rotation, affine transformation, displacement, flipping, denoising, enhancement and the like may be further added. Besides direct channel splicing, fusion techniques such as channelwise subtraction and spatial (horizontal or perpendicular) splicing may be used. In addition, besides fusion of raw data in Raw domain, intermediate features may also be extracted and fused using a network, to implement feature interaction between templates and samples.

In the feature extraction subnetwork, a particular convolutional neural network is constructed to perform feature extraction on the template-sample fused information. Besides, classification models including other CNN (Resnet, Densenet, Unet, etc.) architectures, Transformer architectures, MLP architectures, etc. may also be used as feature extraction and classification networks in the present disclosure.

Besides parameter update and training using the training mechanism based on machine learning and deep learning, constant network parameters may also be manually configured directly during the network construction, i.e., the parameters can be directly used for chip-terminal deployment without any training to achieve universal fingerprint anti-counterfeiting.

By default, registered template information with matchable texture is used for feature fusion. Besides, on the one hand, the registered template information can be shielded, and only the unlocking sample can be used to implement independent anti-counterfeiting driven by an artificial intelligence network; and on the other hand, remaining unmatchable templates may be further collected to construct other information fusion modes.

The present disclosure can achieve the following technical effects:

a three-dimensional anti-counterfeiting solution based on a registered template and unlocking-pressing raw domain fusion information is constructed following a physical principle of echoing fingerprint data collected from an ultrasonic under-screen fingerprint, filling the defects of the ultrasonic under-screen fingerprint anti-counterfeiting technology; and a segmentwise network is constructed to innovatively combine a preprocessing subnetwork, a feature extraction subnetwork, and a feature fusion classification subnetwork architecture, thereby implementing peer-to-peer integrated training. The involved preprocessing subnetwork can implement fitting and approximation of preprocessing processes of different fingerprint collection systems based on the guidance of different system modal data, to achieve the effects of preprocessing. Innovatively, based on fingerprint matching, to-be-stored template information is substantially optimized, an entire template image is replaced with a feature domain descriptor, the memory usage is optimized to 1/80 of the original memory usage, and the registered template and an unlocking sample signal are fused in a feature domain, thereby improving the effectiveness and availability of ultrasonic fingerprint anti-counterfeiting. A convolutional neural network is built using the mainstream artificial intelligence technology, manual explicit (acoustic impedance, distance, medium features, etc.) feature extraction is replaced with an implicit extraction method of neural network features, and a similarity measurement network of fingerprint authenticity information in the feature domain is constructed in a directional manner, thereby further improving the robustness of the anti-counterfeiting technology for the system environment. The constructed method for fingerprint anti-counterfeiting using template-sample fused features can be combined with a static anti-counterfeiting method independent of a template, reflecting the performance gains.

From the description of the above embodiments, those skilled in the art can clearly understand that the method according to the above embodiments may be implemented by means of software with the addition of a desired universal hardware platform, or of course, may be implemented by hardware, but in many cases, the former is a better implementation. Based on such understanding, the technical solutions of the present disclosure essentially or a part of the technical solutions that contributes to the prior art may be embodied in the form of a software product which is stored in a storage medium (e.g., a ROM/RAM, a magnetic disk, or an optical disk) and includes some instructions for causing a terminal device (which may be, e.g., a mobile phone, a computer, a server, or a network device) to implement the method according to the embodiments of the present disclosure.

In this embodiment, an apparatus for training a fingerprint anti-counterfeiting neural network is further provided. The apparatus is configured to implement the above embodiments and preferred embodiments, and the descriptions that have been provided will not be repeated. As used below, the term "module" may be a combination of software and/or hardware capable of implementing a predetermined function. Although the apparatus described in the following embodiments is preferably implemented by software, the implementation by hardware or a combination of software and hardware is also possible and conceived of.

FIG. 10 is a structural block diagram of an apparatus for training a fingerprint anti-counterfeiting neural network according to an embodiment of the present disclosure. As shown in FIG. 10, the apparatus comprises:

a first obtaining module 1002 configured to obtain a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger; and

a training module 1004 configured to train an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

In an example embodiment, the above apparatus is further configured to iteratively train the initial classification network using the plurality of groups of training data until the number of trainings on the initial classification network reaches a target number, or end the training to obtain the target classification network when a loss value outputted from a target loss function of the initial classification network satisfies a preset training end condition; wherein the initial classification network further comprises a preprocessing subnetwork configured to convert raw domain data collected by a fingerprint sensor into a feature description matrix; the loss value outputted from the target loss function is a loss value determined based on a loss value outputted from a first loss function of the preprocessing subnetwork and a loss value outputted from a second loss function of the classification subnetwork; the first loss function is used to represent a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

In an example embodiment, the above apparatus is further configured to perform a k-th training (wherein k is a positive integer) on the initial classification network by: obtaining a k-th group of training data used for the k-th training on the initial classification network from the plurality of groups of training data; inputting the first raw domain data, the second raw domain data, and the third raw domain data in the k-th group of training data into the preprocessing subnetwork of the initial classification network with a (k-1)-th training, to obtain a first feature description matrix, a second feature description matrix, and a third feature description matrix respectively, wherein the initial classification network with a 0-th training is the initial classification network that is not trained, and the preprocessing subnetwork is configured to convert raw domain data obtained by a fingerprint sensor into a feature description matrix; inputting the first feature description matrix, the second feature description matrix, and the third feature description matrix into a feature extraction subnetwork of the initial classification network with the (k-1)-th training for dimension reduction, to obtain a fourth feature description matrix, a fifth feature description matrix, and a sixth feature description matrix respectively; inputting the fourth feature description matrix and the fifth feature description matrix into the fusion subnetwork of the initial classification network with the (k-1)-th training, to obtain the first fingerprint matching pair of the k-th training;

inputting the fourth feature description matrix and the sixth feature description matrix into the fusion subnetwork of the initial classification network with the (k-1)-th training, to obtain the second fingerprint matching pair of the k-th training;

inputting the first fingerprint matching pair of the k-th training and the second fingerprint matching pair of the k-th training into the classification subnetwork of the initial classification network with the (k-1)-th training, to obtain a predicted tag of the k-th training, wherein the predicted tag of the k-th training is used to represent an authenticity recognition result of the initial classification network with the (k-1)-th training for a fingerprint of the real finger corresponding to the second raw domain data in the k-th group of training data, and an authenticity recognition result of the initial classification network with the (k-1)-th training for a fingerprint of the prosthetic finger corresponding to the third raw domain data in the k-th group of training data; and

determining a loss value outputted from the first loss function of the k-th training based on the first feature description matrix, the second feature description matrix, the third feature description matrix, and a known feature description matrix corresponding to the first raw domain data, the second raw domain data and the third raw domain data in the k-th group of training data; determining a loss value outputted from the second loss function of the k-th training based on the predicted tag of the k-th training and a known real tag of the k-th training; determining a loss value outputted from the target loss function of the k-th training based on the loss value outputted from the first loss function of the k-th training and the loss value outputted from the second loss function of the k-th training; and adjusting a value of a parameter in the initial classification network with the (k-1)-th training when k is smaller than the target number, or when the loss value outputted from the target loss function with the k-th training does not satisfy the training end condition, to obtain the initial classification network with the k-th training.

In an example embodiment, the target loss function is:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork, $loss_{BCE}$ is the second loss function of the classification subnetwork; and

the classification network further comprises a feature extraction subnetwork, the preprocessing subnetwork is configured to convert the raw domain data obtained by the fingerprint sensor into the feature description matrix and input it into the feature extraction subnetwork, and the feature extraction subnetwork is configured to perform dimension reduction on the inputted matrix, and input a matrix description matrix obtained after dimension reduction into the fusion subnetwork.

In an example embodiment, the loss value outputted from the first loss function of the preprocessing subnetwork is determined based on formulas below:

$$loss_{MSE\_t} = \frac{\sum_{i=1}^{h} \sum_{j=1}^{w} (f(i,j) - y(i,j))}{h \times w}$$

$$loss_{MSE} = loss_{MSE\_1} + loss_{MSE\_2} + loss_{MSE\_3}$$

wherein, $t \in (1,3)$, $i \in (1,h)$, $j \in (1,w)$, and $f(i,j)$ are feature description matrices outputted from the preprocessing subnetwork, $y(i,j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

In an example embodiment, the loss value outputted from the second loss function of the classification subnetwork is determined based on a formula below:

$$loss_{BCE} = -y \times \log(x) - (1-y) \times \log(1-x)$$

wherein, y is a real tag value of the first fingerprint matching pair or the second fingerprint matching pair, and x is a predicted tag value of the first fingerprint matching pair or the second fingerprint matching pair outputted from the classification subnetwork.

According to another embodiment of the present disclosure, an apparatus for fingerprint anti-counterfeiting is provided, comprising: a second obtaining module configured to obtain raw domain data of a to-be-detected fingerprint; a preprocessing module configured to preprocess the raw domain data of the to-be-detected fingerprint via a preprocessing subnetwork of a target classification network to obtain a seventh feature description matrix; a feature extraction module configured to perform feature extraction on the seventh feature description matrix via a feature extraction subnetwork of the target classification network to obtain an eighth feature description matrix; a determination module configured to determine a ninth feature description matrix matching the eighth feature description matrix in a fingerprint template feature library, wherein a plurality of feature description matrices of a real finger entered in a fingerprint template are stored in the fingerprint template feature library; a fusion module configured to fuse the eighth feature description matrix and the ninth feature description matrix to obtain a fused feature matrix; and a recognition module configured to input the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

In an example embodiment, the above apparatus is further configured to obtain, before determining the ninth feature description matrix matching the eighth feature description matrix in the fingerprint template feature library, raw domain data of the real finger entered in the fingerprint template; preprocess the raw domain data using the preprocessing subnetwork of the target classification network to obtain a feature description matrix of the raw domain data; perform feature extraction on the feature description matrix using the feature extraction subnetwork of the target classification network to obtain a target feature description matrix of the raw domain data; and store the target feature description matrix in the fingerprint template feature library.

It should be noted that the above modules may be implemented by software or hardware, and, for the latter, may be implemented by, but not limited to: locating all of the above modules in a same processor; or locating the above modules in different processors respectively in any combination.

An embodiment of the present disclosure further provides a computer-readable storage medium, storing a computer program therein, wherein the computer program, when executed by a processor, implements the steps of the method in any one of the above embodiments.

In an example embodiment, the above computer-readable storage medium may include, but is not limited to, various mediums capable of storing computer programs, such as a U disk, a Read-Only Memory (abbreviated as ROM), a Random Access Memory (abbreviated as RAM), a mobile hard disk drive, a magnetic disk, or an optical disk.

An embodiment of the present disclosure further provides an electronic apparatus, comprising: a memory and a processor, wherein the memory stores a computer program, and the processor is configured to run the computer program to implement the steps in any one of the above method embodiments.

In an example embodiment, the above electronic apparatus may further comprise a transmission device and an input/output device, wherein the transmission device is connected to the above processor, and the input/output device is connected to the above processor.

The examples described in the embodiments and the example embodiments mentioned above may be referred to for specific examples in this embodiment, which will not be repeated here in this embodiment.

An embodiment of the present disclosure further provides a computer program product, comprising a computer program, wherein the computer program, when executed by a processor, implements the steps of the method in the embodiments of the present disclosure.

An embodiment of the present disclosure further provides a computer program product, comprising a non-volatile computer-readable storage medium, wherein the non-volatile computer-readable storage medium stores a computer program, wherein the computer program, when executed by a processor, implements the steps of the method in the embodiments of the present disclosure.

Obviously, those skilled in the art should understand that the above modules or steps of the present disclosure can be implemented by a general-purpose computing apparatus, they can be concentrated on a single computing apparatus, or distributed on a network composed of a plurality of computing apparatuses, and they can be implemented by a program code executable by the computing apparatus, so that they can be stored in a storage apparatus and executed by the computing apparatus, and in some cases, the shown or described steps can be executed in a different sequence than that here, or they can be made into integrated circuit modules respectively, or a plurality of modules or steps therein can be made into a single integrated circuit module for implementation. Thus, the present disclosure is not limited to any particular combination of hardware and software.

The above description merely provides preferred embodiments of the present disclosure, and is not intended to limit the present application. For those skilled in the art, the present disclosure may have various modifications and alterations. Any modification, equivalent replacement, improvement, or the like made within the principle of the present disclosure should be encompassed within the scope of protection of the present disclosure.

**Claims**

1. A method for training a fingerprint anti-counterfeiting neural network, comprising:

   obtaining a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger; and
   training an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

2. The method according to claim 1, wherein training the initial classification network using the plurality of groups of training data to obtain the target classification network comprises:

   iteratively training the initial classification network using the plurality of groups of training data until a number of trainings on the initial classification network reaches a target number, or ending the training to obtain the target classification network when a loss value outputted from a target loss function of the initial classification network satisfies a preset training end condition;
   wherein the initial classification network further comprises a preprocessing subnetwork configured to convert raw domain data collected by a fingerprint sensor into a feature description matrix;
   the loss value outputted from the target loss function is a loss value determined based on a loss value outputted from a first loss function of the preprocessing subnetwork and a loss value outputted from a second loss function of the classification subnetwork; and

the first loss function is used to represent a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

3. The method according to claim 2, wherein iteratively training the initial classification network using the plurality of groups of training data comprises: performing a k-th training (wherein k is a positive integer) on the initial classification network by:

obtaining a k-th group of training data used for the k-th training on the initial classification network from the plurality of groups of training data; inputting the first raw domain data, the second raw domain data, and the third raw domain data in the k-th group of training data into the preprocessing subnetwork of the initial classification network with a (k-1)-th training, to obtain a first feature description matrix, a second feature description matrix, and a third feature description matrix respectively, wherein the initial classification network with a 0-th training is the initial classification network that is not trained; inputting the first feature description matrix, the second feature description matrix, and the third feature description matrix into a feature extraction subnetwork of the initial classification network with the (k-1)-th training for dimension reduction, to obtain a fourth feature description matrix, a fifth feature description matrix, and a sixth feature description matrix respectively; inputting the fourth feature description matrix and the fifth feature description matrix into the fusion subnetwork of the initial classification network with the (k-1)-th training, to obtain the first fingerprint matching pair of the k-th training; inputting the fourth feature description matrix and the sixth feature description matrix into the fusion subnetwork of the initial classification network with the (k-1)-th training, to obtain the second fingerprint matching pair of the k-th training; inputting the first fingerprint matching pair of the k-th training and the second fingerprint matching pair of the k-th training into the classification subnetwork of the initial classification network with the (k-1)-th training, to obtain a predicted tag of the k-th training, wherein the predicted tag of the k-th training is used to represent an authenticity recognition result of the initial classification network with the (k-1)-th training for a fingerprint of the real finger corresponding to the second raw domain data in the k-th group of training data, and an authenticity recognition result of the initial classification network with the (k-1)-th training for a fingerprint of the prosthetic finger corresponding to the third raw domain data in the k-th group of training data; and determining a loss value outputted from the first loss function of the k-th training based on the first feature description matrix, the second feature description matrix, the third feature description matrix, and a known feature description matrix corresponding to the first raw domain data, the second raw domain data and the third raw domain data in the k-th group of training data; determining a loss value outputted from the second loss function of the k-th training based on the predicted tag of the k-th training and a known real tag of the k-th training; determining a loss value outputted from the target loss function of the k-th training based on the loss value outputted from the first loss function of the k-th training and the loss value outputted from the second loss function of the k-th training; and adjusting a value of a parameter in the initial classification network with the (k-1)-th training when k is smaller than the target number, or when the loss value outputted from the target loss function of the k-th training does not satisfy the training end condition, to obtain the initial classification network with the k-th training.

4. The method according to claim 2, wherein the target loss function is:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork, $loss_{BCE}$ is the second loss function of the classification subnetwork; and

the initial classification network further comprises a feature extraction subnetwork, the preprocessing subnetwork is configured to convert the raw domain data obtained by the fingerprint sensor into the feature description matrix and input it into the feature extraction subnetwork, and the feature extraction subnetwork is configured to perform dimension reduction on the inputted feature description matrix, and input a matrix obtained after the dimension reduction into the fusion subnetwork.

5. The method according to claim 4, wherein the loss value outputted from the first loss function of the preprocessing subnetwork is determined based on formulas below:

$$loss_{MSE\_t} = \frac{\sum_{i=1}^{h}\sum_{j=1}^{w}(f(i,j)-y(i,j))}{h\times w}$$

$$loss_{MSE} = loss_{MSE\_1} + loss_{MSE\_2} + loss_{MSE\_3}$$

wherein, $t \in (1,3)$, $i \in (1,h)$, $j \in (1,w)$, and $f(i,j)$ are feature description matrices outputted from the preprocessing subnetwork, $y(i,j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

6. The method according to claim 4, wherein the loss value outputted from the second loss function of the classification subnetwork is determined based on a formula below:

$$loss_{BCE} = -y\times\log(x)-(1-y)\times\log(1-x)$$

wherein, y is a real tag value of the first fingerprint matching pair or the second fingerprint matching pair, and x is a predicted tag value of the first fingerprint matching pair or the second fingerprint matching pair outputted from the classification subnetwork.

7. A method for fingerprint anti-counterfeiting, comprising:

obtaining raw domain data of a to-be-detected fingerprint;
preprocessing the raw domain data of the to-be-detected fingerprint via a preprocessing subnetwork of a target classification network to obtain a seventh feature description matrix;
performing feature extraction on the seventh feature description matrix via a feature extraction subnetwork of the target classification network to obtain an eighth feature description matrix;
determining a ninth feature description matrix matching the eighth feature description matrix in a fingerprint template feature library, wherein a plurality of feature description matrices of a real finger entered in a fingerprint template are stored in the fingerprint template feature library;
fusing the eighth feature description matrix and the ninth feature description matrix to obtain a fused feature matrix; and
inputting the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

8. The method according to claim 7, wherein before determining the ninth feature description matrix matching the eighth feature description matrix in the fingerprint template feature library, the method further comprises:

obtaining raw domain data of the real finger entered in the fingerprint template;
preprocessing the raw domain data using the preprocessing subnetwork of the target classification network to obtain a feature description matrix of the raw domain data;
performing dimension reduction on the feature description matrix using the feature extraction subnetwork of the target classification network to obtain a feature description matrix after the dimension reduction; and
storing the feature description matrix after the dimension reduction in the fingerprint template feature library.

9. An apparatus for training a fingerprint anti-counterfeiting neural network, comprising:

a first obtaining module configured to obtain a plurality of groups of training data, each group of the training data comprising: first raw domain data, second raw domain data, and third raw domain data, wherein the first raw domain data is, when a real finger is entered in a fingerprint template, collected raw data of the real finger, the second raw domain data is raw data of the real finger collected during fingerprint verification using the real finger, and the third raw domain data is raw data collected during fingerprint verification using a prosthetic finger in place of the real finger; and
a training module configured to train an initial classification network using the plurality of groups of training data to obtain a target classification network, wherein the initial classification network comprises a fusion subnetwork and a classification subnetwork, and for each group of the training data, the fusion subnetwork is configured to generate a first fingerprint matching pair based on a feature description matrix of the first raw domain data and the second raw domain data, and generate a second fingerprint matching pair based on a feature description matrix of the first raw domain data and the third raw domain data, and the classification subnetwork is configured to perform fingerprint classification and recognition based on the first fingerprint matching pair and the second fingerprint matching pair.

10. The apparatus according to claim 9, wherein

the training module is further configured to iteratively train the initial classification network using the plurality of groups of training data until a number of trainings on the initial classification network reaches a target number, or ending the training to obtain the target classification network when a loss value outputted from a target loss function of the initial classification network satisfies a preset training end condition;
wherein the initial classification network further comprises a preprocessing subnetwork configured to convert raw domain data collected by a fingerprint sensor into a feature description matrix;
the loss value outputted from the target loss function is a loss value determined based on a loss value outputted from a first loss function of the preprocessing subnetwork and a loss value outputted from a second loss function of the classification subnetwork; and
the first loss function is used to represent a loss between the feature description matrix outputted from the preprocessing subnetwork and a known feature description matrix of the raw domain data inputted into the preprocessing subnetwork, and the second loss function is used to represent a loss between a predicted tag value outputted from the classification subnetwork and a real tag corresponding to a feature description matrix inputted into the classification subnetwork.

11. The apparatus according to claim 10, wherein the training module is further configured to perform a k-th training (wherein k is a positive integer) on the initial classification network by:

obtaining a k-th group of training data used for the k-th training on the initial classification network from the plurality of groups of training data;
inputting the first raw domain data, the second raw domain data, and the third raw domain data in the k-th group of training data into the preprocessing subnetwork of the initial classification network with a (k-1)-th training, to obtain a first feature description matrix, a second feature description matrix, and a third feature description matrix respectively, wherein the initial classification network with a 0-th training is the initial classification network that is not trained;
inputting the first feature description matrix, the second feature description matrix, and the third feature description matrix into a feature extraction subnetwork of the initial classification network with the (k-1)-th training for dimension reduction, to obtain a fourth feature description matrix, a fifth feature description matrix, and a sixth feature description matrix respectively;
inputting the fourth feature description matrix and the fifth feature description matrix into the fusion subnetwork of the initial classification network with the (k-1)-th training, to obtain the first fingerprint matching pair of the k-th training;
inputting the fourth feature description matrix and the sixth feature description matrix into the fusion subnetwork of the initial classification network with the (k-1)-th training, to obtain the second fingerprint matching pair of the k-th training;
inputting the first fingerprint matching pair of the k-th training and the second fingerprint matching pair of the k-th training into the classification subnetwork of the initial classification network with the (k-1)-th training, to obtain a predicted tag of the k-th training, wherein the predicted tag of the k-th training is used to represent an authenticity recognition result of the initial classification network with the (k-1)-th training for a fingerprint of the real finger corresponding to the second raw domain data in the k-th group of training data, and an authenticity recognition result of the initial classification network with the (k-1)-th training for a fingerprint of the prosthetic finger corresponding to the third raw domain data in the k-th group of training data; and
determining a loss value outputted from the first loss function of the k-th training based on the first feature description matrix, the second feature description matrix, the third feature description matrix, and a known feature description matrix corresponding to the first raw domain data, the second raw domain data and the third raw domain data in the k-th group of training data;
determining a loss value outputted from the second loss function of the k-th training based on the predicted tag of the k-th training and a known real tag of the k-th training; determining a loss value outputted from the target loss function of the k-th training based on the loss value outputted from the first loss function of the k-th training and the loss value outputted from the second loss function of the k-th training; and adjusting a value of a parameter in the initial classification network with the (k-1)-th training when k is smaller than the target number, or when the loss value outputted from the target loss function of the k-th training does not satisfy the training end condition, to obtain the initial classification network with the k-th training.

12. The apparatus according to claim 10, wherein the target loss function is:

$$loss = \alpha \times loss_{MSE} + \beta \times loss_{BCE}$$

wherein, $\alpha$ and $\beta$ are preset values, $loss_{MSE}$ is the first loss function of the preprocessing subnetwork, $loss_{BCE}$ is the second loss function of the classification subnetwork; and

the initial classification network further comprises a feature extraction subnetwork, the preprocessing subnetwork is configured to convert the raw domain data obtained by the fingerprint sensor into the feature description matrix and input it into the feature extraction subnetwork, and the feature extraction subnetwork is configured to perform dimension reduction on the inputted feature description matrix, and input a matrix obtained after the dimension reduction into the fusion subnetwork.

13. The apparatus according to claim 12, wherein the loss value outputted from the first loss function of the preprocessing subnetwork is determined based on formulas below:

$$loss_{MSE\_t} = \frac{\sum_{i=1}^{h}\sum_{j=1}^{w}(f(i,j) - y(i,j))}{h \times w}$$

$$loss_{MSE} = loss_{MSE\_1} + loss_{MSE\_2} + loss_{MSE\_3}$$

wherein, $t \in (1,3)$, $i \in (1, h)$, $j \in (1, w)$, and $f(i, j)$ are feature description matrices outputted from the preprocessing subnetwork, $y(i, j)$ is a known feature description matrix of the raw domain data inputted into the preprocessing subnetwork, $h$ is a longitudinal feature size of the feature description matrix, $w$ is a horizontal feature size of the feature description matrix, $loss_{MSE\_1}$ is a loss value when input data of the preprocessing subnetwork is the first raw domain data, $loss_{MSE\_2}$ is a loss value when input data of the preprocessing subnetwork is the second raw domain data, and $loss_{MSE\_3}$ is a loss value when input data of the preprocessing subnetwork is the third raw domain data.

14. The apparatus according to claim 12, wherein the loss value outputted from the second loss function of the classification subnetwork is determined based on a formula below:

$$loss_{BCE} = -y \times \log(x) - (1-y) \times \log(1-x)$$

wherein, y is a real tag value of the first fingerprint matching pair or the second fingerprint matching pair, and x is a predicted tag value of the first fingerprint matching pair or the second fingerprint matching pair outputted from the classification subnetwork.

15. An apparatus for fingerprint anti-counterfeiting, comprising:

a second obtaining module configured to obtain raw domain data of a to-be-detected fingerprint;
a preprocessing module configured to preprocess the raw domain data of the to-be-detected fingerprint via a preprocessing subnetwork of a target classification network to obtain a seventh feature description matrix;
a feature extraction module configured to perform feature extraction on the seventh feature description matrix via a feature extraction subnetwork of the target classification network to obtain an eighth feature description matrix;
a determination module configured to determine a ninth feature description matrix matching the eighth feature description matrix in a fingerprint template feature library, wherein a plurality of feature description matrices of a real finger entered in a fingerprint template are stored in the fingerprint template feature library;
a fusion module configured to fuse the eighth feature description matrix and the ninth feature description matrix to obtain a fused feature matrix; and
a recognition module configured to input the fused feature matrix into a classification subnetwork of the target classification network to obtain an authenticity recognition result of the to-be-detected fingerprint, wherein the authenticity recognition result is used to indicate whether the to-be-detected fingerprint is a fingerprint of the real finger or a fingerprint of a prosthetic finger.

16. The apparatus according to claim 15, wherein

the determination module is further configured to obtain raw domain data of the real finger entered in the fingerprint template;
the raw domain data is preprocessed using the preprocessing subnetwork of the target classification network to obtain a feature description matrix of the raw domain data;

dimension reduction is performed on the feature description matrix using the feature extraction subnetwork of the target classification network to obtain a feature description matrix after the dimension reduction; and

the feature description matrix after the dimension reduction is stored in the fingerprint template feature library.

17. A computer-readable storage medium, storing a computer program therein, wherein the computer program, when executed by a processor, implements steps of the method according to any one of claims 1-6 or 7-8.

18. An electronic apparatus, comprising a memory and a processor, wherein the memory stores a computer program, and the processor is configured to execute the computer program to implement the method according to any one of claims 1-6 or 7-8.

19. A computer program product, comprising a computer program, wherein the computer program, when executed by a processor, implements the method according to any one of claims 1-6 or 7-8.

Input/output device 108

Transmission device 106

Processor 102

Memory 104

**FIG. 1**

Obtaining a plurality of groups of training data, each group of the training data comprising: first raw domain data, second raw domain data, and third raw domain data — S202

Training an initial classification network using the plurality of groups of training data to obtain a target classification network — S204

**FIG. 2**

First raw
domain data

Second raw
domain data

Third raw
domain data

Pre-
Proc-
ess-
ing
SUb-
net-
work

Featur
e EX-
Trac-
tion
SUb-
net-
work

Real finger
fingerprint template
channel d

Real finger
verification channel d

Real finger fingerprint
template channel d

Prosthetic
finger fingerprint
template channel d

h

w

h

w

**FIG.3**

Eighth feature description matrix 4*4*10

Ninth feature description matrix 4*4*10

Fingerprint template feature library

Unmatchable template data 4*4*10

Performing fusion via a fusion subnetwork to obtain a fused feature matrix 4*4*20

Matching successfully 4*4*10

Performing, via a classification subnetwork, authenticity recognition and outputting a score

Unmatchable template data 4*4*10

Score>0.5

Y

N

Unmatchable template data 4*4*10

Liveness accept

Spoof reject

**FIG. 4**

**FIG. 5**

| Subnetwork | Layer name | Input | Output |
|---|---|---|---|
| Implicit preprocessing subnetwork | Convolution | 80*80*2 | 80*80*2 |
| | Preprocessing simulation block | 80*80*2 | 80*80*1 |
| | | | |
| Feature extraction subnetwork | Convolution | 80*80*1 | 72*72*10 |
| | Depth-wise separable convolutional block | 72*72*10 | 9*9*10 |
| | Pooling | 9*9*10 | 4*4*10 |
| | | | |
| Feature fusion operation | Tensor splicing | 4*4*10*2 | 4*4*20 |
| | | | |
| Feature fusion classification subnetwork | Continuous convolution block | 4*4*20 | 128*1 |
| | Full connection | 128*1 | 2*1 |
| | Nonlinear probability mapping | 2*1 | 2*1 |

**FIG. 6**

Offline training          Online anti-counterfeiting

Fingerprint template of a real finger

Fingerprint verification of the real finger

Fingerprint verification of a prosthetic finger

S704 — Feature description matrix of a to-be-detected fingerprint

S701 — Collecting training data

S702 — Constructing a classification network

S703 — 3. Optimizing a network parameter

S705 — 4. Matching a fingerprint index

S706 — 5. Recognizing an anti-counterfeiting network

**FIG. 7**

| Scenario | Total number | Traditional features recommended for anti-counterfeiting (competing product) | | This solution | |
|---|---|---|---|---|---|
| | | Decoding successfully | Decoding rate | Decoding successfully | Decoding rate |
| 120 um highly simulated prosthetic fingerprint type A | 150 | 135 | 88.24% | 8 | 5.23% |
| 120 um highly simulated prosthetic fingerprint type B | 150 | 111 | 74.00% | 20 | 13.33% |
| 120 um highly simulated prosthetic fingerprint type C | 150 | 106 | 70.67% | 14 | 9.33% |
| 120 um highly simulated prosthetic fingerprint type D | 150 | 131 | 87.33% | 17 | 11.33% |
| 120 um highly simulated prosthetic fingerprint type E | 150 | 119 | 79.33% | 38 | 25.33% |
| 120 um highly simulated prosthetic fingerprint type F | 150 | 134 | 89.33% | 6 | 1.00% |
| Total number | 903 | 736 | 81.51% | 103 | 11.41% |

**FIG. 8**

| Scenario | Total number | Deep learning static anti-counterfeiting (standard comparison solution) | | Deep similarity measurement deep anti-counterfeiting (This solution) | |
|---|---|---|---|---|---|
| | | Decoding successfully | Decoding rate | Decoding successfully | Decoding rate |
| 120 um highly simulated prosthetic fingerprint type A | 309 | 11 | 3.56% | 0 | 0.00% |
| 120 um highly simulated prosthetic fingerprint type B | 351 | 52 | 14.81% | 20 | 5.70% |
| 120 um highly simulated prosthetic fingerprint type C | 305 | 103 | 33.77% | 59 | 19.34% |
| 120 um highly simulated prosthetic fingerprint type D | 300 | 61 | 20.33% | 34 | 11.33% |
| 120 um highly simulated prosthetic fingerprint type E | 325 | 1 | 0.31% | 1 | 0.31% |
| Total number | 1590 | 228 | **14.34%** | 114 | **7.17%** |

**FIG. 9**

**FIG. 10**

## INTERNATIONAL SEARCH REPORT

| International application No. |
| --- |
| **PCT/CN2024/138580** |

**A. CLASSIFICATION OF SUBJECT MATTER**

G06V 10/82(2022.01)i

According to International Patent Classification (IPC) or to both national classification and IPC

**B. FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 指纹, 识别, 防伪, 训练, 传感器, 原生域, 录入, 验证, 真, 假, 描述矩阵, 特征矩阵, 转换, 融合, fingerprint, recognition, anti-counterfeiting, train, sensor, native domain, enrollment, verificat ion, true, false, description, feature, matrix, transition, fusion

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113920550 A (FOCALTECH ELECTRONICS (SHENZHEN) CO., LTD.) 11 January 2022 (2022-01-11) <br> description, paragraphs 61-105 | 1-19 |
| Y | CN 106295555 A (SHENZHEN CHIPSAILING TECHNOLOGY CO., LTD.) 04 January 2017 (2017-01-04) <br> description, paragraphs 5-58 | 1-19 |
| A | CN 109255318 A (NANJING UNIVERSITY OF INFORMATION SCIENCE & TECHNOLOGY) 22 January 2019 (2019-01-22) <br> entire document | 1-19 |
| A | CN 110096954 A (TONGJI UNIVERSITY) 06 August 2019 (2019-08-06) <br> entire document | 1-19 |
| A | US 2023018194 A1 (HUAWEI TECHNOLOGIES CO., LTD.) 19 January 2023 (2023-01-19) <br> entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 April 2025** | **22 April 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/138580**

| Patent document cited in search report | | | Publication date (day/month/year) | Patent family member(s) | | | Publication date (day/month/year) |
|---|---|---|---|---|---|---|---|
| CN | 113920550 | A | 11 January 2022 | TW | 202228011 | A | 16 July 2022 |
| CN | 106295555 | A | 04 January 2017 | | None | | |
| CN | 109255318 | A | 22 January 2019 | | None | | |
| CN | 110096954 | A | 06 August 2019 | | None | | |
| US | 2023018194 | A1 | 19 January 2023 | EP | 4060551 | A1 | 21 September 2022 |
| | | | | WO | 2021121112 | A1 | 24 June 2021 |
| | | | | CN | 112989888 | A | 18 June 2021 |

Form PCT/ISA/210 (patent family annex) (July 2022)